# EUROPEAN PATENT SPECIFICATION

(11) **EP 3 483 480 B1**
(45) Date of publication and mention of the grant of the patent: **25.11.2020**
(21) Application number: 18204898.3
(22) Date of filing: 07.11.2018
(51) Int. Cl.: F16H 61/00, B60G 21/00, B60T 13/74, F16D 65/28

(54) **HYDRAULIC CONTROL DEVICE FOR A VEHICLE**
HYDRAULISCHE STEUERUNGSVORRICHTUNG FÜR EIN FAHRZEUG
DISPOSITIF DE COMMANDE HYDRAULIQUE POUR UN VÉHICULE

(30) Priority: 08.11.2017 TW 106138551
(43) Date of publication of application: 15.05.2019
(73) Proprietor: Kwang Yang Motor Co., Ltd., Kaohsiung City 807 (TW)
(72) Inventor: TING, Hsin-Chih, 807 Kaohsiung (TW); LEE, Yen-Hsiu, 813 Kaohsiung City (TW); HUANG, Bi-Song, 802 Kaohsiung City (TW)
(74) Representative: Wynne-Jones IP Limited

(56) References cited:
- EP-A1- 1 562 098
- WO-A1-2013/098119
- US-A- 4 913 624
- US-A- 5 868 555
- US-B1- 6 446 435

## Description

The invention relates to a hydraulic system for a vehicle, and more particularly to a hydraulic control device for a straddle type vehicle that provides a pressurized hydraulic fluid to a hydraulic fluid circuit and is to be directed to different subsystems.

Referring to FIGS. 1 and 2, a known selective actuation device 1 for a vehicle disclosed in EP 1562098 includes an actuator 11 acting upon an actuation lever 14. The actuation lever 14 has a thruster element 141 for the actuation of a first operating group represented by an oil pump 16 which, in acting upon a hydraulic circuit 15, in turn activates a locking device 17 of an anti-rolling system and stroke stop devices 18, 18' of front suspensions. A cam element 19 is movable by the actuation lever 14 between an activation position in which the cam element 19 acts upon a second operating group represented by a cable 20 to actuate a rear brake of the vehicle, and a rest position in which the activation of the first operating group is disassociated from the second operating group. In particular, the actuator 11, through a worm screw, acts upon an adapted pinion 12, which makes gears 120, 13 rotated.

For use in a variety of vehicles having different engine displacements, it is sometimes necessary to increase a power output of the actuation device 1 by increasing the power of a motor, hence increasing the ratio of an external reduction gear assembly, or increasing the lever ratio, for example. However, increment of the power of a motor results in increment of coil windings or increment of speed-reduction ratio, which upsizes the components of the actuation device 1. Increment of the ratio of the external reduction gear assembly renders the size of the structure large, and elongates the required operating time. Increment of the lever ratio causes the transmitting mechanism to have complex arrangement and be upsized.

Therefore, an object of the invention is to provide a hydraulic control device that can alleviate at least one of the drawbacks of the prior art.

According to a first aspect of the invention, the hydraulic control device is for connecting with a hydraulic fluid circuit of a vehicle, the vehicle including a left shock-absorbing device and a right shock-absorbing device, and includes a housing, an actuator, a main pump mechanically actuated to create a fluid pressure or provide a pressurized hydraulic fluid to the hydraulic fluid circuit for locking or unlocking the left and right shock-absorbing devices, an actuating lever having an end which is connected with the main pump, a thrust member rotatably mounted on an opposite end of the actuating lever about a thrust rotation center, and a cam rotatably mounted on the housing and actuated by the actuator to be rotated about a cam rotation center. The cam is configured to be in sliding contact with the thrust member to rotate the thrust member about the thrust rotation center when rotated, so as to transmit a working thrust to the actuating lever for the actuating lever to perform a reciprocating action along an axial direction. This in turn actuates the main pump to create a fluid pressure or provide a pressurized hydraulic fluid to the hydraulic fluid circuit. The cam is rotatable from an initial position, where the cam rotation center is distant from the thrust rotation center by a shortest distance, to a working position. During the rotation from the initial position to the working position, when the cam is rotated toward an angular position, where a largest thrust is applied upon the actuating lever, a contact of the thrust member with the cam is brought gradually close to an extending line through the cam rotation center and the thrust rotation center once the contact is away from the extending line.

According to a second aspect of the invention, the hydraulic control device is for connecting with a hydraulic fluid circuit of a vehicle, the vehicle including a left shock-absorbing device and a right shock-absorbing device, and includes a housing, an actuator, a main pump mechanically actuated to create a fluid pressure or provide a pressurized hydraulic fluid to the hydraulic fluid circuit for locking or unlocking the left and right shock-absorbing devices, an actuating lever having an end which is connected with the main pump, a thrust member integrally formed on an opposite end of the actuating lever, and having an arcuate surface which has a constant radius of curvature in terms of a center of curvature, and a cam rotatably mounted on the housing and actuated by the actuator to be rotated about a cam rotation center. The cam is configured to be in sliding contact with the arcuate surface of the thrust member when rotated, to transmit a working thrust to the actuating lever for the actuating lever to perform a reciprocating movement along an axial direction. This in turn actuates the main pump to create a fluid pressure or provide a pressurized hydraulic fluid to the hydraulic fluid circuit. The cam is rotatable from an initial position, where the cam rotation center is distant from the center of curvature by a shortest distance, to a working position. During the rotation from the initial position to the working position, when the cam is rotated toward an angular position, where a largest thrust is applied upon the actuating lever, a contact of the thrust member with the cam is brought gradually close to an extending line through the cam rotation center and the center of curvature of the thrust member once the contact is away from the extending line.

Other features and advantages of the invention will become apparent in the following detailed description of the embodiments with reference to the accompanying drawings, of which:

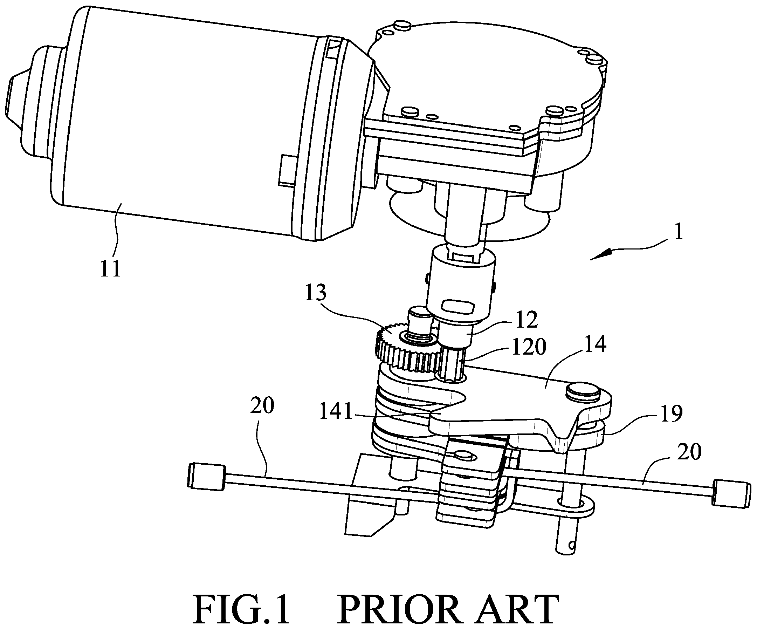

FIG. 1 is a perspective view of a conventional selective actuation device disclosed in EP 1562098;

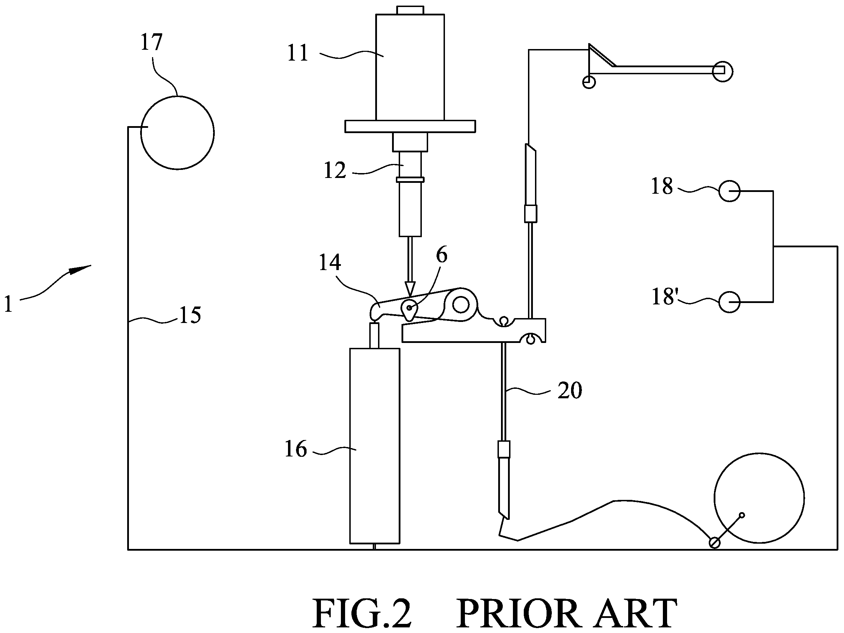

FIG. 2 is a schematic view of the conventional selective actuation device incorporated in a vehicle;
FIG. 3 is a schematic view illustrating an embodiment of a hydraulic control device for a vehicle according to the invention;
FIG. 4 is a perspective view of a first embodiment of the hydraulic control device;
FIG. 5 is a schematic side view illustrating the first embodiment in an initial position;
FIGS. 6 and 7 are schematic side views illustrating the movement of the first embodiment to a working position;
FIG. 8 is a schematic view illustrating the rotation of a cam and the movement of a thrust member;
FIG. 9 is a diagram illustrating the rotation angle of the cam, the hydraulic reaction force of a main pump and the thrust output of the thrust member;
FIG. 10 is a schematic side view illustrating a second embodiment of the hydraulic control device for a vehicle according to the invention; and
FIG. 11 is a schematic side view illustrating a third embodiment of the hydraulic control device for a vehicle according to the invention.

Before the invention is described in greater detail, it should be noted that where considered appropriate, reference numerals or terminal portions of reference numerals have been repeated among the figures to indicate corresponding or analogous elements, which may optionally have similar characteristics.

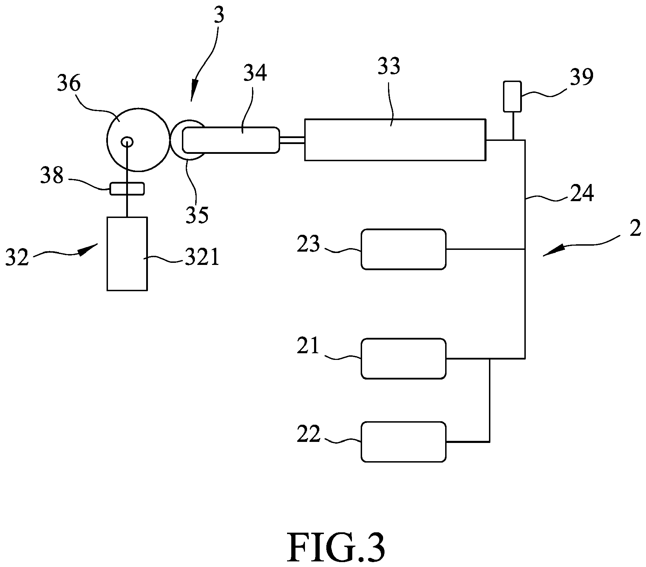

Referring to FIGS. 3 to 5, a first embodiment of a hydraulic control device 3 is employed in a vehicle 2. The vehicle 2 includes a left shock-absorbing device 21 coupled with a left front wheel, a right shock-absorbing device 22 coupled with a right front wheel, a tiltable mechanism 23 pivotally connected to a front vehicle frame and coupled between the left and right shock-absorbing devices 21, 22, and a hydraulic fluid circuit 24 connected to the left and right shock-absorbing devices 21, 22 and the tiltable mechanism 23. The hydraulic control device 3 is employed for connecting with the hydraulic fluid circuit 24, and includes a housing 31, an actuator 32, a main pump 33 disposed on the housing 31 and having a cylinder body 330 which defines and is elongated along an axial line (A) that extends in an axial direction, an actuating lever 34 having an end which is connected with the main pump 33 and extending along the axial line (A), a thrust member 35 pivotably mounted on an opposite end of the actuating lever 34 about a thrust rotation center 351, a cam 36 pivotably mounted on the housing 31 about a cam rotation center 361 that is located at the axial line (A) and in sliding contact with the thrust member 35, a cam angle sensor 38 for detecting the cam 36, and a pressure sensor 39 for detecting the hydraulic fluid circuit 24.

The actuator 32 includes a motor 321 disposed on the housing 31, and a reduction gearing assembly 322 disposed in the housing 31 and coupled with the motor 321 and the cam 36 to transmit a driving force of the motor 321 so as to rotate the cam 36 at a reduced speed. The main pump 33 is mechanically actuated to create a fluid pressure or provide a pressurized hydraulic fluid to the hydraulic fluid circuit 24 so as to control the left and right shock-absorbing devices 21, 22 and the tiltable mechanism 23. The actuating lever 34 is movably mounted in the housing 31, and has a guide groove 341 formed in an outer peripheral wall of the actuating lever 34 and elongated in the axial direction. The housing 31 has a guide pin 37 which extends in and is slidable along the guide groove 341 to guide a linear movement of the actuating lever 34 in the axial direction. In this embodiment, the thrust member 35 is in the form of a roller which is circular in cross-section and is pivotably connected to the actuating lever 34 about a roller axis that is transverse to the axial direction for facilitating replacement and maintenance of the thrust member 35. The cam 36 is circular in cross-section, and has the cam rotation center 361 located at the axial line (A), and a center of circle which is distant from the cam rotation center 361 by a distance in the axial direction. The cam angle sensor 38 is disposed to detect the rotation angle of the cam 36 and electrically connected with the motor 321 to control a driving force of the motor 321. The pressure sensor 39 is disposed to detect a fluid pressure in the hydraulic fluid circuit 24 and electrically connected with the motor 321 to control a driving force of the motor 321.

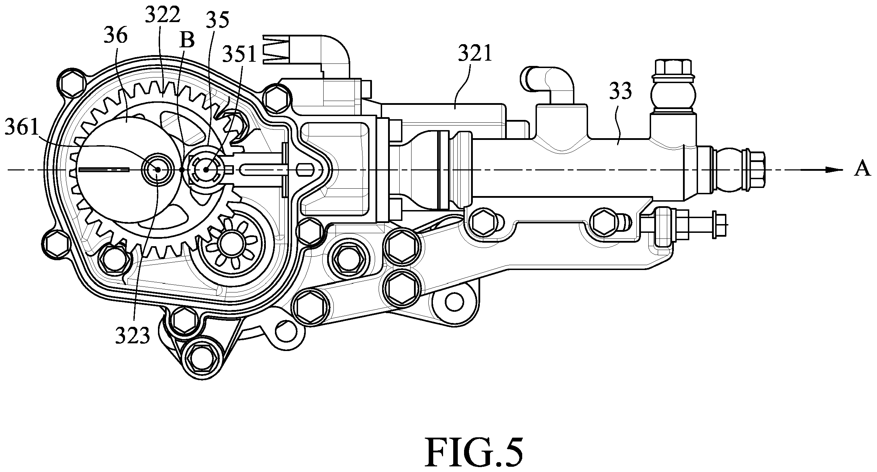

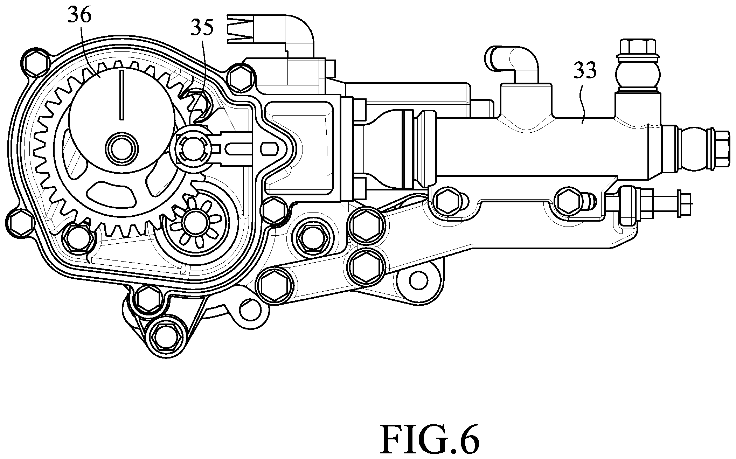

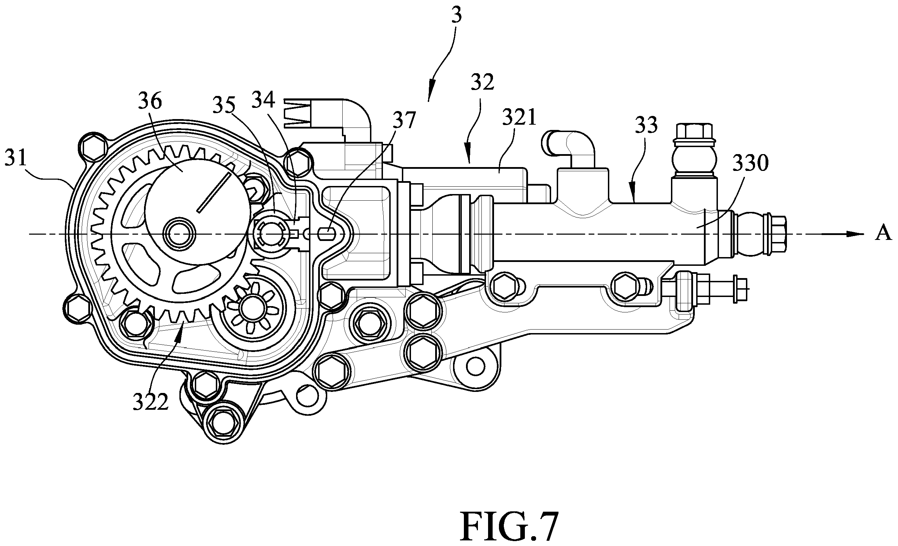

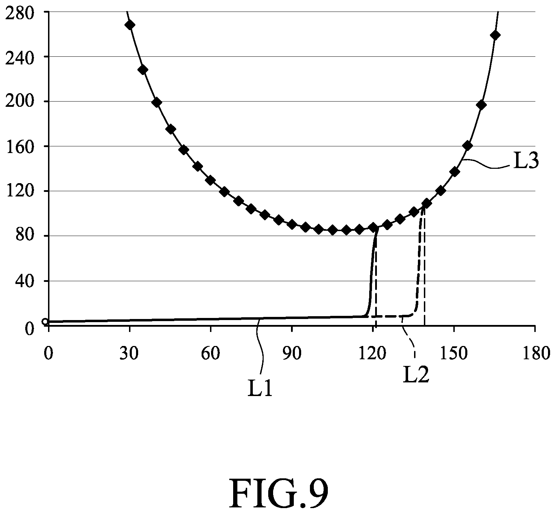

With reference to FIGS. 5 to 7, in this embodiment, the cam 36 and the reduction gearing assembly 322 are mounted on a spindle 323 which is rotatable relative to the housing 31 such that the spindle 323 is rotated when the reduction gearing assembly 322 is rotated by means of the motor 321 so as to allow the cam 36 to eccentrically rotate about the cam rotation center 361 to perform a reciprocation between an initial position (see FIG. 5) and a working position (see FIG. 7) . In this embodiment, the geometric center of the thrust member 35 coincides with the thrust rotation center 351 such that, in the initial position, the cam rotation center 361 of the cam 36 is distant from the thrust rotation center 351 of the thrust member 35 by a shortest distance, and, in the working position, the distance between the cam rotation center 361 and the thrust rotation center 351 is the largest. During the rotation from the initial position to the working position, when the cam 36 is rotated toward an angular position, where a largest thrust is applied upon the actuating lever 34 (as shown in FIG. 9, particularly the region of the solid line (L1) from the end of the nearly horizontal segment to the peak of the nearly vertical segment), a contact (B) of the thrust member 35 with the cam 36 is brought gradually close to an extending line through the cam rotation center 361 and the thrust rotation center 351 once the contact (B) is away from the extending line. In this embodiment, the extending line coincides with the axial line (A). The eccentric rotation of the cam 36 results in the linear movement of the thrust member 35 in the axial direction to transmit a working thrust to the actuating lever 34 for the same to perform a reciprocating movement along the axial line (A), which in turn actuates the main pump 33 to create a fluid pressure or provide a pressurized hydraulic fluid to the hydraulic fluid circuit 24 for locking or unlocking either one of the left and right shock-absorbing devices 21, 22 and the tiltable mechanism 23 (see FIG. 3).

The profile of the cam 36 is determined in accordance with the required pressure stroke of the main pump 33 that is estimated by the required amount of fluid and pressure for a locking action. For instance, in this embodiment, when the cam 36 is in the initial position (i.e., an angular position of 0 degree), as shown in FIG. 5, the moving distance of the thrust member 35 is the smallest so that the main pump 33 is in a fluid pressure releasing state or a pressurized hydraulic fluid unprovided state. When the cam 36 is in the working position (i.e. an angular position of about 120 degrees), as shown in FIG. 7, the moving distance of the thrust member 35 is the largest so as to provide the main pump 33 with the largest amount of fluid pressure or pressurized hydraulic fluid.

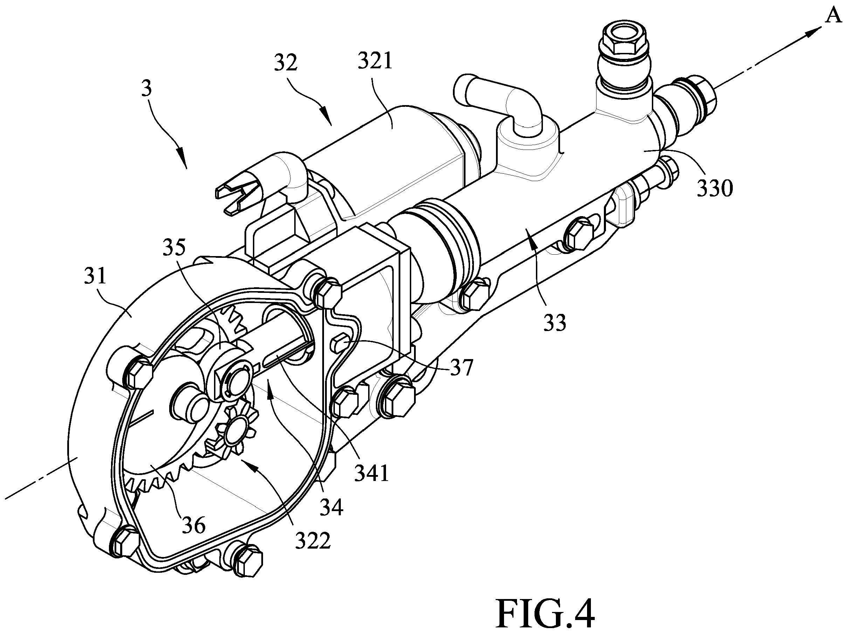

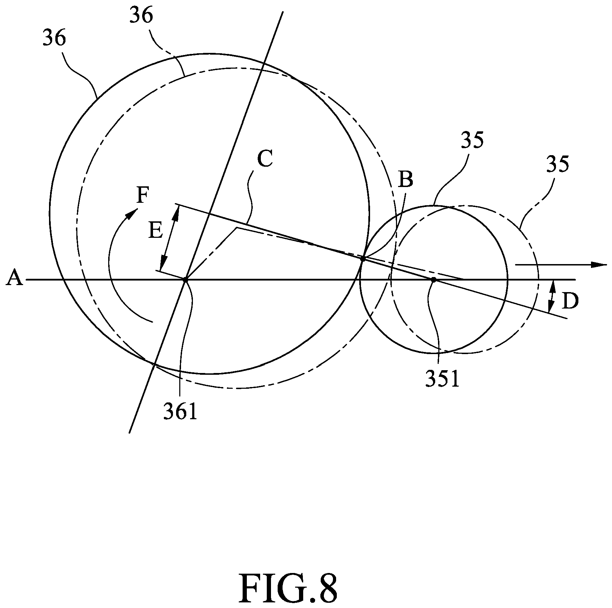

With reference to FIGS. 4, 8 and 9, the axial line (A) extends through the rotation centers 351, 361 of the thrust member 35 and the cam 36. The thrust member 35 and the cam 36 are subjected to a reaction force which extends along an action line (C) that passes through the contact (B). During the rotation of the cam 36, when the cam 36 is rotated toward the angular position, where a largest thrust is applied upon the actuating lever 34, the contact (B) away from the axial line (A) is brought gradually close to the axial line (A) such that the included angle (D) between the axial line (A) and the action line (C) is gradually reduced, which shortens the arm of force (E) between the action line (C) and the axial line (A) so as to reduce the torque (F) generated as a result of the reaction, and in turn reduce the loading of the motor 321. FIG. 8 illustrates the contact (B) of the cam 36 with the thrust member 35 along with the incremental angle of rotation of the cam 36. In FIG. 9, the horizontal axis indicates the rotation angle (degrees) of the cam 36, and the vertical axis indicates the thrust output (kilograms) of the thrust member 35. The solid line (L1) may represent an internal thrust of the main pump 33 along with the incremental angle of rotation of the cam 36. The dashed line (L2) may represent an internal thrust of the main pump 33 along with the incremental angle of rotation of another cam 36, under the condition that such cam 36 has a profile with a varied cam surface. The threshold of the dashed line (L2) (at the nearly vertical segment of the dashed line (L2)) is larger than the threshold of the solid line (L1) (at the nearly vertical segment of the solid line (L1)). The square-marked solid line (L3) may represent the largest thrust that the thrust member 35 can apply upon the actuating lever 34, and is determined by the maximum rated torque of the motor 321. FIGS. 8 and 9 illustrate that varying the configuration of the cam 36 can increase a power output of the hydraulic control device 3 without the need to vary the motor 321.

Through the cam 36 eccentrically rotated about the cam rotation center 361 to perform a reciprocation and to rotate the thrust member 35, the arm of force (E) of the reaction is shortened so as to reduce the torque (F) of the reaction, and in turn reduce the loading of the motor 321. Thus, the power output of the hydraulic control device 3 can be relatively high so as to facilitate miniaturization of the device 3. Moreover, the thrust member 35 and the cam 36 have a simple construction that is easy to manufacture at a relatively low manufacturing cost. The cam 36 may be in a non-circular shape with various curvatures determined in accordance with the requirements. The guide pin 37 can guide the linear movement of the actuating lever 34 to prevent deflection of the thrust member 35.

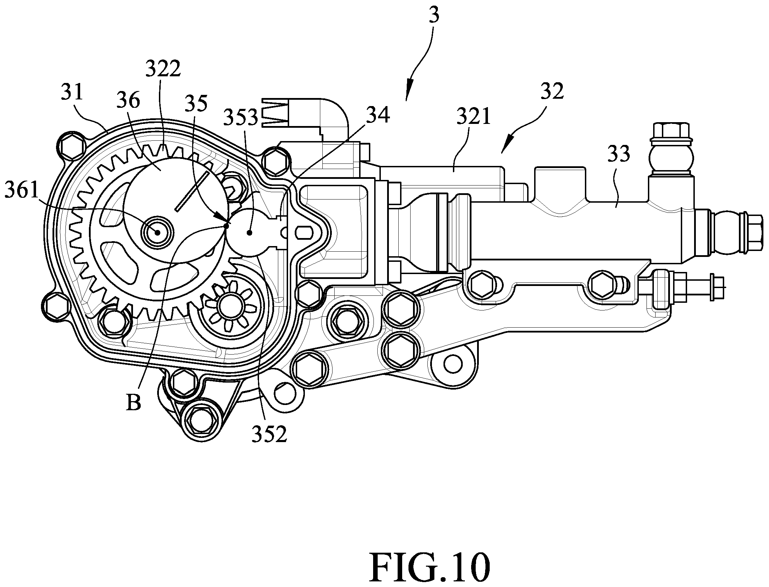

Referring to FIG. 10, in a second embodiment, the thrust member 35 is integrally formed on the opposite end of the actuating lever 34, and has an arcuate surface 352 which has a constant radius of curvature in terms of a center of curvature 353. The cam 36 is configured to be in sliding contact with the arcuate surface 352 of the thrust member 35 when rotated, so as to transmit a working thrust to the actuating lever 34 along an axial direction. The cam 36 is rotated from an initial position, where the cam rotation center 361 is distant from the center of curvature 353 by a shortest distance, to a working position. During the rotation from the initial position to the working position, a contact (B) of the thrust member 35 with the cam 36 is brought gradually close to an extending line through the cam rotation center 361 and the center of curvature 353 of the thrust member 35 once the contact (B) is away from the extending line. Such arrangement and structure of the thrust member 35 can enhance the structural strength of the thrust member 35, require a fewer number of components to thereby render manufacture easy and reduce the manufacturing cost, and broaden the workability of the device 3.

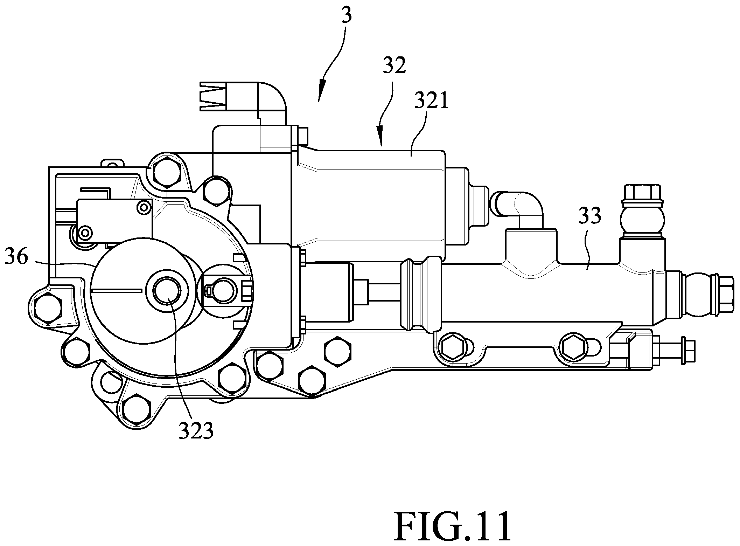

Referring to FIG. 11, in a third embodiment, the actuator 32 includes a motor 321 which is directly coupled with the cam 36 through the spindle 323 to rotate the cam 36 without any gearing construction so as to render the construction simple.

## Claims

1. A hydraulic control device (3) for connecting with a hydraulic fluid circuit (24) of a vehicle (2), the vehicle (2) including a left shock-absorbing device (21) and a right shock-absorbing device (22), comprising:
a housing (31);
an actuator (32);
a main pump (33) mechanically actuated to create a fluid pressure or provide a pressurized hydraulic fluid to the hydraulic fluid circuit (24) for locking or unlocking the left and right shock-absorbing devices (21, 22); and
an actuating lever (34) having an end which is connected with said main pump (33), said hydraulic control device (3) being **characterized in that** said hydraulic control device (3) further comprises:
a thrust member (35) rotatably mounted on an opposite end of said actuating lever (34) about a thrust rotation center (351); and
a cam (36) rotatably mounted on said housing (31) and actuated by said actuator (32) to be rotated about a cam rotation center (361), said cam (36) being configured to be in sliding contact with said thrust member (35) to rotate said thrust member (35) about the thrust rotation center (351) when rotated, so as to transmit a working thrust to said actuating lever (34) for said actuating lever (34) to perform a reciprocating movement along an axial direction, which in turn actuates said main pump (33) to create a fluid pressure or provide a pressurized hydraulic fluid to said hydraulic fluid circuit (24), said cam (36) being rotatable from an initial position, where the cam rotation center (361) is distant from the thrust rotation center (351) by a shortest distance, to a working position, during the rotation from the initial position to the working position, when said cam (36) is rotated toward an angular position, where a largest thrust is applied upon said actuating lever (34), a contact (B) of said thrust member (35) with said cam (36) being brought gradually close to an extending line through the cam rotation center (361) and the thrust rotation center (351) once the contact (B) is away from the extending line.

2. The hydraulic control device (3) as claimed in Claim 1, **characterized in that** said main pump (33) includes a cylinder body (330) which defines and is elongated along an axial line (A) that extends in the axial direction, said actuating lever (34) extending and being movable along the axial line (A), the extending line coinciding with the axial line (A) such that the cam rotation center (361) and the thrust rotation center (351) are located at the axial line (A).

3. The hydraulic control device (3) as claimed in Claim 1, **characterized in that** said thrust member (35) is in the form of a roller which is pivotably connected to said actuating lever (34) about a roller axis that is transverse to the axial direction.

4. The hydraulic control device (3) as claimed in Claim 1, **characterized in that** said actuator (32) includes a motor (321) and a reduction gearing assembly (322) coupled with said motor (321) and said cam (36) to transmit a driving force of said motor (321) to rotate said cam (36) at a reduced speed.

5. The hydraulic control device (3) as claimed in Claim 1, **characterized in that** said actuator (32) includes a motor (321) coupled with said cam (36) to rotate said cam (36).

6. The hydraulic control device (3) as claimed in Claim 4 or Claim 5, further **characterized by** a cam angle sensor (38) disposed to detect the rotation angle of said cam (36) and electrically connected with said motor (321) to control a driving force of said motor (321), and a pressure sensor (39) disposed to detect a fluid pressure in the hydraulic fluid circuit (24) and electrically connected with said motor (321) to control the driving force of said motor (321).

7. The hydraulic control device (3) as claimed in Claim 1, **characterized in that** said actuating lever (34) is movably mounted in said housing (31), and has a guide groove (341) formed in an outer peripheral wall of said actuating lever (34) and elongated in the axial direction, said housing (31) having a guide pin (37) which extends in and is slidable along said guide groove (341) to guide a linear movement of said actuating lever (34) in the axial direction.

8. The hydraulic control device (3) as claimed in Claim 1, **characterized in that** said cam (36) is circular in cross-section, and has a center of circle which is distant from the cam rotation center (361) by a distance in the axial direction.

9. A hydraulic control device (3) for connecting with a hydraulic fluid circuit (24) of a vehicle (2), the vehicle (2) including a left shock-absorbing device (21) and a right shock-absorbing device (22), comprising:
a housing (31);
an actuator (32);
a main pump (33) mechanically actuated to create a fluid pressure or provide a pressurized hydraulic fluid to the hydraulic fluid circuit (24) for locking or unlocking the left and right shock-absorbing devices (21, 22); and
an actuating lever (34) having an end which is connected with said main pump (33), said hydraulic control device (3) being **characterized in that** said hydraulic control device (3) further comprises:
a thrust member (35) integrally formed on an opposite end of said actuating lever (34), and having an arcuate surface (352) which has a constant radius of curvature in terms of a center of curvature (353) ; and
a cam (36) rotatably mounted on said housing (31) and actuated by said actuator (32) to be rotated about a cam rotation center (361), said cam (36) being configured to be in sliding contact with said arcuate surface (352) of said thrust member (35) when rotated, to transmit a working thrust to said actuating lever (34) for said actuating lever (34) to perform a reciprocating movement along an axial direction, which in turn actuates said main pump (33) to create a fluid pressure or provide a pressurized hydraulic fluid to said hydraulic fluid circuit (24), said cam (36) being rotatable from an initial position, where the cam rotation center (361) is distant from the center of curvature (353) by a shortest distance, to a working position, during the rotation from the initial position to the working position, when said cam (36) is rotated toward an angular position, where a largest thrust is applied upon said actuating lever (34), a contact (B) of said thrust member (35) with said cam (36) being brought gradually close to an extending line through the cam rotation center (361) and the center of curvature (353) of said thrust member (35) once the contact (B) is away from the extending line.

10. The hydraulic control device (3) as claimed in Claim 9, **characterized in that** said actuator (32) includes a motor (321) and a reduction gearing assembly (322) coupled with said motor (321) and said cam (36) to transmit a driving force of said motor (321) to rotate said cam (36) at a reduced speed.

11. The hydraulic control device (3) as claimed in Claim 9, **characterized in that** said actuator (32) includes a motor (321) coupled with said cam (36) to rotate said cam (36).

12. The hydraulic control device (3) as claimed in Claim 10 or Claim 11, further **characterized by** a cam angle sensor (38) disposed to detect the rotation angle of said cam (36) and electrically connected with said motor (321) to control a driving force of said motor (321), and a pressure sensor (39) disposed to detect a fluid pressure in the hydraulic fluid circuit (24) and electrically connected with said motor (321) to control the driving force of said motor (321).

13. The hydraulic control device (3) as claimed in Claim 9, **characterized in that** said actuating lever (34) is movably mounted in said housing (31), and has a guide groove (341) formed in an outer peripheral wall of said actuating lever (34) and elongated in the axial direction, said housing (31) having a guide pin (37) which extends in and is slidable along said guide groove (341) to guide a linear movement of said actuating lever (34) in the axial direction.

14. The hydraulic control device (3) as claimed in Claim 9, **characterized in that** said cam (36) is circular in cross-section, and has a center of circle which is distant from the cam rotation center (361) by a distance in the axial direction.

## Patentansprüche

1. Hydrauliksteuervorrichtung (3) zum Verbinden mit einem Hydraulikfluidkreislauf (24) eines Fahrzeugs (2), wobei das Fahrzeug (2) eine linke Stoßdämpfungsvorrichtung (21) und eine rechte Stoßdämpfungsvorrichtung (22) beinhaltet, die Folgendes umfasst:
ein Gehäuse (31);
einen Aktuator (32);
eine Hauptpumpe (33), die mechanisch betätigt wird, um einen Fluiddruck zu erzeugen oder ein unter Druck gesetztes Hydraulikfluid an den Hydraulikfluidkreislauf (24) zum Verriegeln oder Entriegeln der linken und der rechten Stoßdämpfungsvorrichtung (21, 22) bereitzustellen; und
einen Betätigungshebel (34), der ein Ende aufweist, das mit der Hauptpumpe (33) verbunden ist, wobei die Hydrauliksteuervorrichtung (3) **dadurch gekennzeichnet ist, dass** die Hydrauliksteuervorrichtung (3) ferner Folgendes umfasst:
ein Schubelement (35), das an einem gegenüberliegenden Ende des Betätigungshebels (34) um ein Schubdrehzentrum (351) herum drehbar montiert ist; und
einen Nocken (36), der an dem Gehäuse (31) drehbar montiert und durch den Aktuator (32) betätigt wird, um um ein Nockendrehzentrum (361) herum gedreht zu werden, wobei der Nocken (36) konfiguriert ist, um in Gleitberührung mit dem Schubelement (35) zu stehen, um das Schubelement (35) um das Schubdrehzentrum (351) herum zu drehen, wenn es gedreht wird, so dass ein Arbeitsschub an den Betätigungshebel (34) übertragen wird, damit der Betätigungshebel (34) ein Spiel entlang einer Achsenrichtung durchführt, das wiederum die Hauptpumpe (33) betätigt, um einen Fluiddruck zu erzeugen oder ein unter Druck gesetztes Hydraulikfluid an den Hydraulikfluidkreislauf (24) bereitzustellen, wobei der Nocken (36) von einer Ausgangsposition, in der das Nockendrehzentrum (361) von dem Schubdrehzentrum (351) um einen kürzesten Abstand entfernt ist, in eine Arbeitsposition drehbar ist, wobei, während der Drehung von der Ausgangsposition in die Arbeitsposition, wenn der Nocken (36) zu einer Winkelposition hin gedreht wird, in der ein größter Schub auf den Betätigungshebel (34) ausgeübt wird, eine Berührung (B) des Schubelements (35) mit dem Nocken (36) allmählich nahe an eine sich erstreckende Linie durch das Nockendrehzentrum (361) und das Schubdrehzentrum (351) hindurch gebracht wird, sobald die Berührung (B) abseits von der sich erstreckenden Linie liegt.

2. Hydrauliksteuervorrichtung (3) nach Anspruch 1, die **dadurch gekennzeichnet ist, dass** die Hauptpumpe (33) einen Zylinderkörper (330) beinhaltet, der eine Achsenlinie (A) definiert und entlang dieser gestreckt ist, die sich in der Achsenrichtung erstreckt, wobei der Betätigungshebel (34) sich entlang der Achsenlinie (A) erstreckt und beweglich ist, wobei die sich erstreckende Linie mit der Achsenlinie (A) derart zusammenfällt, dass sich das Nockendrehzentrum (361) und das Schubdrehzentrum (351) an der Achsenlinie (A) befinden.

3. Hydrauliksteuervorrichtung (3) nach Anspruch 1, die **dadurch gekennzeichnet ist, dass** das Schubelement (35) in der Form einer Rolle ist, die mit dem Betätigungshebel (34) um eine Rollenachse herum schwenkbar verbunden ist, die zu der Achsenrichtung quergerichtet ist.

4. Hydrauliksteuervorrichtung (3) nach Anspruch 1, die **dadurch gekennzeichnet ist, dass** der Aktuator (32) einen Motor (321) und eine Vorgelegeanordnung (322) beinhaltet, die mit dem Motor (321) und dem Nocken (36) gekoppelt ist, um eine Antriebskraft des Motors (321) zu übertragen, um den Nocken (36) mit einer verringerten Geschwindigkeit zu drehen.

5. Hydrauliksteuervorrichtung (3) nach Anspruch 1, die **dadurch gekennzeichnet ist, dass** der Aktuator (32) einen Motor (321) beinhaltet, der mit dem Nocken (36) gekoppelt ist, um den Nocken (36) zu drehen.

6. Hydrauliksteuervorrichtung (3) nach Anspruch 4 oder 5, die ferner durch einen Nockenwinkelsensor (38), der angeordnet ist, um den Drehwinkel des Nockens (36) zu erfassen, und mit dem Motor (321) elektrisch verbunden ist, um eine Antriebskraft des Motors (321) zu steuern, und einen Drucksensor (39) gekennzeichnet ist, der angeordnet ist, um einen Fluiddruck in dem Hydraulikfluidkreislauf (24) zu erfassen, und mit dem Motor (321) elektrisch verbunden ist, um die Antriebskraft des Motors (321) zu steuern.

7. Hydrauliksteuervorrichtung (3) nach Anspruch 1, die **dadurch gekennzeichnet ist, dass** der Betätigungshebel (34) in dem Gehäuse (31) bewegbar montiert ist und eine Führungsnut (341) aufweist, die in einer äußeren Umfangswand des Betätigungshebels (34) ausgebildet ist und in der Achsenrichtung gestreckt ist, wobei das Gehäuse (31) einen Führungsstift (37) aufweist, der sich in die Führungsnut (341) erstreckt und entlang dieser gleitbar ist, um eine lineare Bewegung des Betätigungshebels (34) in der Achsenrichtung zu führen.

8. Hydrauliksteuervorrichtung (3) nach Anspruch 1, die **dadurch gekennzeichnet ist, dass** der Nocken (36) im Querschnitt kreisförmig ist und ein Kreiszentrum aufweist, das von dem Nockendrehzentrum (361) um einen Abstand in der Achsenrichtung entfernt ist.

9. Hydrauliksteuervorrichtung (3) zum Verbinden mit einem Hydraulikfluidkreislauf (24) eines Fahrzeugs (2), wobei das Fahrzeug (2) eine linke Stoßdämpfungsvorrichtung (21) und eine rechte Stoßdämpfungsvorrichtung (22) beinhaltet, die Folgendes umfasst:
ein Gehäuse (31);
einen Aktuator (32);
eine Hauptpumpe (33), die mechanisch betätigt wird, um einen Fluiddruck zu erzeugen oder ein unter Druck gesetztes Hydraulikfluid an den Hydraulikfluidkreislauf (24) zum Verriegeln oder Entriegeln der linken und der rechten Stoßdämpfungsvorrichtung (21, 22) bereitzustellen; und
einen Betätigungshebel (34), der ein Ende aufweist, das mit der Hauptpumpe (33) verbunden ist, wobei die Hydrauliksteuervorrichtung (3) **dadurch gekennzeichnet ist, dass** die Hydrauliksteuervorrichtung (3) ferner Folgendes umfasst:
ein Schubelement (35), das an einem gegenüberliegenden Ende des Betätigungshebels (34) einstückig ausgebildet ist und eine bogenförmige Oberfläche (352) aufweist, die einen konstanten Krümmungsradius in Bezug auf ein Krümmungszentrum (353) aufweist; und
einen Nocken (36), der an dem Gehäuse (31) drehbar montiert und von dem Aktuator (32) betätigt wird, um um ein Nockendrehzentrum (361) herum gedreht zu werden, wobei der Nocken (36) konfiguriert ist, um in Gleitberührung mit der bogenförmigen Oberfläche (352) des Schubelements (35) zu stehen, wenn er gedreht wird, um einen Arbeitsschub auf den Betätigungshebel (34) zu übertragen, damit der Betätigungshebel (34) ein Spiel entlang einer Achsenrichtung durchführt, das wiederum die Hauptpumpe (33) betätigt, um einen Fluiddruck zu erzeugen oder ein unter Druck gesetztes Hydraulikfluid an den Hydraulikfluidkreislauf (24) bereitzustellen, wobei der Nocken (36) von einer Ausgangsposition, in der das Nockendrehzentrum (361) von dem Krümmungszentrum (353) um einen kürzesten Abstand entfernt ist, in eine Arbeitsposition drehbar ist, wobei, während der Drehung von der Ausgangsposition in die Arbeitsposition, wenn der Nocken (36) zu einer Winkelposition hin gedreht wird, in der ein größter Schub auf den Betätigungshebel (34) ausgeübt wird, eine Berührung (B) des Schubelements (35) mit dem Nocken (36) allmählich nahe an eine sich erstreckende Linie durch das Nockendrehzentrum (361) und das Krümmungszentrum (353) des Schubelements (35) hindurch gebracht wird, sobald die Berührung (B) abseits von der sich erstreckenden Linie liegt.

10. Hydrauliksteuervorrichtung (3) nach Anspruch 9, die **dadurch gekennzeichnet ist, dass** der Aktuator (32) einen Motor (321) und eine Vorgelegeanordnung (322) beinhaltet, die mit dem Motor (321) und dem Nocken (36) gekoppelt ist, um eine Antriebskraft des Motors (321) zu übertragen, um den Nocken (36) mit einer verringerten Geschwindigkeit zu drehen.

11. Hydrauliksteuervorrichtung (3) nach Anspruch 9, die **dadurch gekennzeichnet ist, dass** der Aktuator (32) einen Motor (321) beinhaltet, der mit dem Nocken (36) gekoppelt ist, um den Nocken (36) zu drehen.

12. Hydrauliksteuervorrichtung (3) nach Anspruch 10 oder 11, die ferner durch einen Nockenwinkelsensor (38), der angeordnet ist, um den Drehwinkel des Nockens (36) zu erfassen, und mit dem Motor (321) elektrisch verbunden ist, um eine Antriebskraft des Motors (321) zu steuern, und einen Drucksensor (39) gekennzeichnet ist, der angeordnet ist, um einen Fluiddruck in dem Hydraulikfluidkreislauf (24) zu erfassen, und mit dem Motor (321) elektrisch verbunden ist, um die Antriebskraft des Motors (321) zu steuern.

13. Hydrauliksteuervorrichtung (3) nach Anspruch 9, die **dadurch gekennzeichnet ist, dass** der Betätigungshebel (34) in dem Gehäuse (31) bewegbar montiert ist und eine Führungsnut (341) aufweist, die in einer äußeren Umfangswand des Betätigungshebels (34) ausgebildet ist und in der Achsenrichtung gestreckt ist, wobei das Gehäuse (31) einen Führungsstift (37) aufweist, der sich in die Führungsnut (341) erstreckt und entlang dieser gleitbar ist, um eine lineare Bewegung des Betätigungshebels (34) in der Achsenrichtung zu führen.

14. Hydrauliksteuervorrichtung (3) nach Anspruch 9, die **dadurch gekennzeichnet ist, dass** der Nocken (36) im Querschnitt kreisförmig ist und ein Kreiszentrum aufweist, das von dem Nockendrehzentrum (361) um einen Abstand in der Achsenrichtung entfernt ist.

## Revendications

1. Dispositif de commande hydraulique (3) destiné à se relier à un circuit de fluide hydraulique (24) d'un véhicule (2), le véhicule (2) comportant un dispositif amortisseur gauche (21) et un dispositif amortisseur droit (22), comprenant :
un boîtier (31) ;
un actionneur (32) ;
une pompe principale (33) actionnée mécaniquement pour créer une pression de fluide ou fournir un fluide hydraulique sous pression au circuit de fluide hydraulique (24) pour verrouiller ou déverrouiller les dispositifs amortisseurs gauche et droit (21, 22) ; et
un levier d'actionnement (34) ayant une extrémité qui est reliée à ladite pompe principale (33), ledit dispositif de commande hydraulique (3) étant **caractérisé en ce que** ledit dispositif de commande hydraulique (3) comprend en outre :
un élément de poussée (35) monté en rotation sur une extrémité opposée dudit levier d'actionnement (34) autour d'un centre de rotation de poussée (351) ; et
une came (36) montée en rotation sur ledit boîtier (31) et actionnée par ledit actionneur (32) pour être mise en rotation autour d'un centre de rotation de came (361), ladite came (36) étant conçue pour être en contact coulissant avec ledit élément de poussée (35) pour mettre en rotation ledit élément de poussée (35) autour du centre de rotation de poussée (351) lorsqu'il est mis en rotation, de manière à transmettre une poussée de travail audit levier d'actionnement (34) pour que ledit levier d'actionnement (34) effectue un mouvement de va-et-vient le long d'une direction axiale, qui à son tour actionne ladite pompe principale (33) pour créer une pression de fluide ou fournir un fluide hydraulique sous pression audit circuit de fluide hydraulique (24), ladite came (36) pouvant être mise en rotation d'une position initiale, où le centre de rotation de came (361) est éloigné du centre de rotation de poussée (351) d'une distance la plus courte, à une position de travail, pendant la rotation de la position initiale à la position de travail, lorsque ladite came (36) est mise en rotation vers une position angulaire, où une plus grande poussée est appliquée sur ledit levier d'actionnement (34), un contact (B) dudit élément de poussée (35), avec ladite came (36) étant amené progressivement à proximité d'une ligne d'extension au travers du centre de rotation de came (361) et du centre de rotation de poussée (351) une fois que le contact (B) est éloigné de la ligne d'extension.

2. Dispositif de commande hydraulique (3) selon la revendication 1, **caractérisé en ce que** ladite pompe principale (33) comporte un corps de cylindre (330) qui définit et est allongé le long d'une ligne axiale (A) qui s'étend dans la direction axiale, ledit levier d'actionnement (34) s'étendant et étant mobile le long de la ligne axiale (A), la ligne d'extension coïncidant avec la ligne axiale (A) de telle sorte que le centre de rotation de came (361) et le centre de rotation de poussée (351) sont situés au niveau de la ligne axiale (A).

3. Dispositif de commande hydraulique (3) selon la revendication 1, **caractérisé en ce que** ledit élément de poussée (35) se présente sous la forme d'un galet qui est relié de manière pivotante audit levier d'actionnement (34) autour d'un axe de galet qui est transversal à la direction axiale.

4. Dispositif de commande hydraulique (3) selon la revendication 1, **caractérisé en ce que** ledit actionneur (32) comporte un moteur (321) et un ensemble d'engrenage de réduction (322) accouplé audit moteur (321) et à ladite came (36) pour transmettre une force d'entraînement dudit moteur (321) pour mettre en rotation ladite came (36) à une vitesse réduite.

5. Dispositif de commande hydraulique (3) selon la revendication 1, **caractérisé en ce que** ledit actionneur (32) comporte un moteur (321) accouplé à ladite came (36) pour mettre en rotation ladite came (36).

6. Dispositif de commande hydraulique (3) selon la revendication 4 ou la revendication 5, **caractérisé en outre par** un capteur d'angle de came (38) disposé pour détecter l'angle de rotation de ladite came (36) et connecté électriquement audit moteur (321) pour commander une force d'entraînement dudit moteur (321), et un capteur de pression (39) disposé pour détecter une pression de fluide dans le circuit de fluide hydraulique (24) et connecté électriquement audit moteur (321) pour commander la force d'entraînement dudit moteur (321).

7. Dispositif de commande hydraulique (3) selon la revendication 1, **caractérisé en ce que** ledit levier d'actionnement (34) est monté de manière mobile dans ledit boîtier (31), et a une rainure de guidage (341) formée dans une paroi périphérique externe dudit levier d'actionnement (34) et allongée dans la direction axiale, ledit boîtier (31) ayant une broche de guidage (37) qui s'étend dans et peut coulisser le long de ladite rainure de guidage (341) pour guider un mouvement linéaire dudit levier d'actionnement (34) dans la direction axiale.

8. Dispositif de commande hydraulique (3) selon la revendication 1, **caractérisé en ce que** ladite came (36) a une section transversale circulaire, et a un centre de cercle qui est éloigné du centre de rotation de came (361) d'une distance dans la direction axiale.

9. Dispositif de commande hydraulique (3) destiné à se relier à un circuit de fluide hydraulique (24) d'un véhicule (2), le véhicule (2) comportant un dispositif amortisseur gauche (21) et un dispositif amortisseur droit (22), comprenant :
un boîtier (31) ;
un actionneur (32) ;
une pompe principale (33) actionnée mécaniquement pour créer une pression de fluide ou fournir un fluide hydraulique sous pression au circuit de fluide hydraulique (24) pour verrouiller ou déverrouiller les dispositifs amortisseurs gauche et droit (21, 22) ; et
un levier d'actionnement (34) ayant une extrémité qui est reliée à ladite pompe principale (33), ledit dispositif de commande hydraulique (3) étant **caractérisé en ce que** ledit dispositif de commande hydraulique (3) comprend en outre :
un élément de poussée (35) formé d'un seul tenant sur une extrémité opposée dudit levier d'actionnement (34), et ayant une surface arquée (352) qui a un rayon de courbure constant en termes d'un centre de courbure (353) ; et
une came (36) montée en rotation sur ledit boîtier (31) et actionnée par ledit actionneur (32) pour être mise en rotation autour d'un centre de rotation de came (361), ladite came (36) étant conçue pour être en contact coulissant avec ladite surface arquée (352) dudit élément de poussée (35) lorsqu'il est mis en rotation, de manière à transmettre une poussée de travail audit levier d'actionnement (34) pour que ledit levier d'actionnement (34) effectue un mouvement de va-et-vient le long d'une direction axiale, qui à son tour actionne ladite pompe principale (33) pour créer une pression de fluide ou fournir un fluide hydraulique sous pression audit circuit de fluide hydraulique (24), ladite came (36) pouvant être mise en rotation d'une position initiale, où le centre de rotation de came (361) est éloigné du centre de courbure (353) d'une distance la plus courte, à une position de travail, pendant la rotation de la position initiale à la position de travail, lorsque ladite came (36) est mise en rotation vers une position angulaire, où une plus grande poussée est appliquée sur ledit levier d'actionnement (34), un contact (B) dudit élément de poussée (35) avec ladite came (36) étant amené progressivement à proximité d'une ligne d'extension au travers du centre de rotation de came (361) et du centre de courbure (353) dudit élément de poussée (35) une fois que le contact (B) est éloigné de la ligne d'extension.

10. Dispositif de commande hydraulique (3) selon la revendication 9, **caractérisé en ce que** ledit actionneur (32) comporte un moteur (321) et un ensemble d'engrenage de réduction (322) accouplé audit moteur (321) et à ladite came (36) pour transmettre une force d'entraînement dudit moteur (321) pour mettre en rotation ladite came (36) à une vitesse réduite.

11. Dispositif de commande hydraulique (3) selon la revendication 9, **caractérisé en ce que** ledit actionneur (32) comporte un moteur (321) accouplé à ladite came (36) pour mettre en rotation ladite came (36).

12. Dispositif de commande hydraulique (3) selon la revendication 10 ou la revendication 11, **caractérisé en outre par** un capteur d'angle de came (38) disposé pour détecter l'angle de rotation de ladite came (36) et connecté électriquement audit moteur (321) pour commander une force d'entraînement dudit moteur (321), et un capteur de pression (39) disposé pour détecter une pression de fluide dans le circuit de fluide hydraulique (24) et connecté électriquement audit moteur (321) pour commander la force d'entraînement dudit moteur (321).

13. Dispositif de commande hydraulique (3) selon la revendication 9, **caractérisé en ce que** ledit levier d'actionnement (34) est monté de manière mobile dans ledit boîtier (31), et a une rainure de guidage (341) formée dans une paroi périphérique externe dudit levier d'actionnement (34) et allongée dans la direction axiale, ledit boîtier (31) ayant une broche de guidage (37) qui s'étend dans et peut coulisser le long de ladite rainure de guidage (341) pour guider un mouvement linéaire dudit levier d'actionnement (34) dans la direction axiale.

14. Dispositif de commande hydraulique (3) selon la revendication 9, **caractérisé en ce que** ladite came (36) a une section transversale circulaire, et a un centre de cercle qui est éloigné du centre de rotation de came (361) d'une distance dans la direction axiale.
